# EUROPÄISCHE PATENTSCHRIFT

(11) **EP 1 942 312 B1**
(45) Veröffentlichungstag und Bekanntmachung des Hinweises auf die Patenterteilung: **12.08.2009**
(21) Anmeldenummer: 07000003.9
(22) Anmeldetag: 02.01.2007
(51) Int. Cl.: G01B 9/02

(54) **Positionserkennungssystem zur berührungslosen interferometrischen Detektion der Ortsposition eines Zielobjektes und damit ausgestattetes Abtastsystem**
Positioning system for the contactless interferometric detection of an object's location and corresponding scanning system
Système détecteur de position pour la détection interférométrique sans contact de la position d'un objet et un système de balayage correspondent

(43) Veröffentlichungstag der Anmeldung: 09.07.2008
(73) Patentinhaber: ISIS Sentronics GmbH, 68199 Mannheim (DE)
(72) Erfinder: Knüttel, Alexander Dr., 69488 Birkenau (DE)
(74) Vertreter: Pfeifer, Hans-Peter

(56) Entgegenhaltungen:
- DE-A1-0102004 039 76
- US-A- 6 134 507
- JIANG B C ET AL: "A REVIEW OF RECENT DEVELOPMENTS IN ROBOT METROLOGY" JOURNAL OF MANUFACTURING SYSTEMS, SOCIETY OF MANUFACTURING ENGINEERS, DEARBORN, MI, US, Bd. 7, Nr. 4, Januar 1988 (1988-01), Seiten 339-357, XP000009603 ISSN: 0278-6125

## Beschreibung

Die Erfindung betrifft ein Positionserkennungssystem zur berührungslosen interferometrischen Detektion der Ortsposition eines Zielobjektes und ein damit ausgestattetes Abtastsystem.

Auf vielen Anwendungsgebieten stellt sich die Aufgabe, die Ortsposition eines Zielobjektes zu bestimmen. Das Zielobjekt kann insbesondere ein auf irgendeine Weise bewegtes oder sich selbständig bewegendes Teil, beispielsweise ein Bestandteil einer Produktions- oder Messmaschine sein.

Die Erfindung richtet sich insbesondere auf Anwendungsfälle, bei denen eine Detektion der Ortsposition mit einer Genauigkeit in der Größenordnung oder sogar besser als 1 µm (sub-µ-Bereich) notwendig ist. Auf diesem Gebiet werden vor allem Systeme, bei denen die gewünschte Abstandsinformation interferometrisch ermittelt wird, sogenannte Laser Tracking-Systeme, verwendet. Solche Systeme haben eine Zielobjekteinheit, die in einer festen Ortsbeziehung zu dem Zielobjekt steht und an der ein Retroreflektor angebracht ist. Außerdem gehört zu dem Laser-Tracking-System eine Messlichtsendeeinheit mit einem Messlichtsender, mit dem Laserlicht auf den Retroreflektor der Zielobjekteinheit gestrahlt wird. Der Retroreflektor ist so ausgebildet, dass er den Messlichtstrahl zu der Lichtquelle zurückreflektiert.

Die Messlichtsendeeinheit enthält eine Interferometeranordnung und einen Detektor, der infolge Überlagerung des Messlichtstrahls mit einem Referenzlichtstrahl interferometrische Messsignale erzeugt, aus denen interferometrische Messdaten abgeleitet werden. Aus diesen interferometrischen Messdaten lassen sich mit extrem hoher Genauigkeit Abstandsinformationen über die Distanz (genauer gesagt über die Änderung der Distanz) zwischen dem Retroreflektor und der Messlichtsendeeinheit ableiten. Diese Abstandsinformationen werden bei der Ermittlung der gewünschten Ortsposition des Zielobjektes verwendet, wobei sie in den meisten Fällen mit Winkelinformationen betreffend den Raumwinkel, an dem sich der Retroreflektor relativ zu der Messlichtsendeeinheit befindet, kombiniert werden:

Solche. Laser-Tracking-Systeme sind beispielsweise in folgenden Publikationen beschrieben:
(1) WO 2005/026772
(2) US 6,667,798 B1
(3) WO 01/09643
(4) US 6,675,122 B1

Nachteilig an bekannten Laser-Tracking-Systemen ist, dass sie konstruktiv aufwendig sind. Insbesondere erfordert die notwendige hochpräzise Nachführung des Messlichtstrahls entsprechend den Bewegungen des Zielobjektes eine aufwendige mechanische Konstruktion.

Der Erfindung liegt auf dieser Grundlage das technische Problem zugrunde, ein Positionierungserkennungssystem zur Verfügung zu stellen, das einem Laser-Tracking-System vergleichbare oder bessere Genauigkeit mit vermindertem Aufwand, insbesondere hinsichtlich hochpräzise beweglicher Teile, ermöglicht.

Dieses Problem wird erfindungsgemäß gelöst durch ein Positionserkennungssystem zur berührungslosen interferometrischen Detektion der Ortsposition eines Zielobjektes, mit einer Zielobjekteinheit und einer Messlichtsendeeinheit mit mindestens einem Messlichtsender, von dem ein Messlichtstrahl mit kohärentem Licht auf die Zielobjekteinheit gestrahlt wird, wobei die Ortsposition der Zielobjekteinheit mittels interferometrischer Messdaten bestimmt wird, die aus Interferenzsignalen gewonnen werden, welche ein Detektor infolge Überlagerung des Messlichtstrahls mit einem Referenzlichtstrahl, der mit dem Messlichtstrahl kohärent ist, erzeugt, welches sich dadurch auszeichnet, dass die Zielobjekteinheft einen Referenzlichtsender einschließt, der so ausgebildet ist, dass er einen Referenzlichtstrahl mit gekrümmten Lichtwellenfronten aussendet, die Zielobjekteinheit mindestens ein Detektorarray mit einer Mehrzahl von Detektorpixeln einschließt, das so an der Zielobjekteinheit befestigt ist, dass der Referenzlichtstrahl des Referenzlichtsenders darauf auftrifft, wobei
- die Wellenfronten des Messlichtstrahls auf das Detektorarray der Zielobjekteinheit mit einer im Vergleich zu den Wellenfronten des Referenzlichtstrahls geringeren Krümmung auftreffen,
- die Wellenfronten des Messlichtstrahls und des Referenzlichtstrahls nur auf einen Teil der Detektorpixel des Detektorarrays hinreichend parallel auftreffen, um die Erzeugung eines Interferenzsignals in dem Detektorpixel zu ermöglichen,
- durch Auswertung der interferenzsignale von mindestens einem ein Interferenzsignal erzeugenden Detektorpixel des Detektorarrays Abstandsinformationen über Änderungen des Abstands zwischen dem jeweiligen Detektorpixel und dem Messlichtsender ermittelt werden und
- die Ortsposition des Zielobjektes relativ zu der Messlichtsendeeinheit unter Verwendung dieser Abstandsinformationen bestimmt wird.

Die Zielobjekteinheit kann ein Teil des Zielobjektes oder eine an diesem befestigte (jedenfalls in einer definierten Ortsposition relativ zu dem Zielobjekt stehende) Einheit sein. Im Gegensatz zu bekannten Laser-Tracking-Systemen ist sie nicht nur ein passiver Reflektor, sondern eine aktive Systemkomponente, die einen Referenzlichtsender und mindestens zwei Detektorarrays einschließt, deren Detektorpixel interferometrische Messsignale erzeugen können, wenn entsprechende (nachfolgend noch näher erläuterte) geometrische Bedingungen eingehalten werden. Um die für die Interferenz erforderliche Kohärenz des Messlichtstrahls und des Referenzlichtstrahls zu gewährleisten, werden beide Lichtstrahlen mittels Strahlteilung von der selben Laserlichtquelle abgeleitet und - zweckmäßigerweise über flexible Lichtleitkabel - einerseits der Lichtsendeeinheit und andererseits der Zielobjekteinheit zugeführt.

Durch die Erfindung werden unter anderem folgende Vorteile erreicht:
- Es ist keine präzise Nachführung des Messlichtstrahls erforderlich. Vielmehr genügt es, wenn der Messlichtstrahl grob auf die Zielobjekteinheit ausgerichtet ist, so dass er mit einer ausreichenden Intensität auf deren Detektorarrays auftrifft. Die Positionserkennung erfordert deswegen in der Regel keine mechanischen Bewegungen. Selbst wenn die Richtung des Messlichtstrahls bei größeren Bewegungen des Zielobjekts geändert werden muss, kann diese Bewegung wegen der geringen Präzisionsanforderungen einfach und kostengünstig realisiert werden.
- Während bei bekannten Laser-Tracking-Systemen Verschmützungen des Retroreflektors zu einer Einschränkung der Messgenauigkeit führen, bestehen vergleichbare Probleme bei der Erfindung nicht.
- Ein weiteres Problem der bekannten Laser-Tracking-Systeme ergibt sich daraus, dass deren Messgenauigkeit durch Änderungen des Einfallswinkels in den Retroreflektor beeinträchtigt wird. Auch diese Beschränkung der Messgenauigkeit entfällt bei der vorliegenden Erfindung.
- Bei bekannten Trackingsystemen wird die Präzision der Abstandsinformation auch dadurch beeinträchtigt, dass das Messlicht den Weg zwischen Sender und Empfänger zweimal zurücklegt und dadurch bestimmte Messfehler, beispielsweise durch Vibrationen der Systemkomponenten, doppelt in den Gesamtfehler eingehen. Bei der Erfindung legt das Messlicht hingegen den Weg zwischen Messlichtsendeeinheit und Zielobjekteinheit nur einmal zurück.
- Die Erfindung ermöglicht es nicht nur, die Position der Zielobjekteinheit (und damit des Zielobjektes) mit extrem hoher Genauigkeit zu bestimmen, sondern auch deren Lage im Raum.

Insgesamt wird mit reduziertem Aufwand eine verbesserte technische Leistung erreicht.

Wie dargelegt, kann das erfindungsgemäße Positionserkennungssystem auf unterschiedlichen Anwendungsgebieten, insbesondere im Bereich der Produktions- und Messtechnik, verwendet werden. Derartige Anwendungsgebiete sind in den oben zitierten Dokumenten (1) bis (4) genannt. Ein weiteres Beispiel zeigt das Dokument
(5) US-Patent 6,134,507.

Gemäß diesem Dokument wird ein Laser-Tracker dazu benutzt, die Position sogenannter nichtkontaktierender Sensoren zu kalibrieren. Gemeint sind damit optische Systeme, die es erlauben, an einer automatischen Fertigungsstraße (beispielsweise in der Automobilproduktion) charakteristische Strukturen des Fertigungsobjektes zu erkennen, um die passgenaue Montage weiterer Teile an dem teilweise fertiggestellten Objekt zu ermöglichen. Auch in diesem Zusammenhang kann ein erfindungsgemäßes Positionserkennungssystem vorteilhaft statt des konventionellen Laser-Trackers eingesetzt werden. Ein weiteres interessantes Anwendungsgebiet sind mini-aktuatorische Greifersysteme, wie sie zur hochpräzisen Bewegung von Elementen in Forschungs- oder Produktionsprozessen verwendet werden.

Ein besonders wichtiges Anwendungsgebiet der Erfindung ist das Abtasten der Oberfläche eines Objektes.

Der Begriff "abtasten" (englisch: "to scan") ist dabei allgemein in dem Sinn zu verstehen, dass er sich auf jedes Verfahren bezieht, bei dem Ortsinformationen über eine Mehrzahl von Messpunkten an einer Oberfläche (nachfolgend als "Oberflächen-Abtastinformation" bezeichnet) gewonnen werden, um die Lage und Form der Oberfläche im Raum zu detektieren. Insbesondere geht es um die Bestimmung der exakten Dimensionen eines Objektes ("dimensionelles Prüfen"), aber auch um Struktureigenschaften der Oberfläche, also beispielsweise deren Rauhigkeit.

Für das Oberflächenabtasten werden meist Koordinaten-Messmaschinen verwendet. Sie haben eine Positionierungseinrichtung mit einem mehrdimensionalen hochpräzisen Antrieb und einen Tastsensor, der von der Positionierungseinrichtung relativ zu dem zu prüfenden Objekt bewegt wird, wobei die Oberfläche des Objekts von dem Tastsensor abgetastet wird. Als Tastsensoren werden hauptsächlich mechanische Taster eingesetzt, die das Messobjekt mit einer dünnen Spitze oder kleinen Kugel berühren, wobei diese Berührung mit elektronischen Mitteln detektiert wird. Dabei kann eine sehr gute Genauigkeit bis in den sub-µm-Bereich erreicht werden. Um die gewünschte Oberflächen-Abtastinformation zu gewinnen, ist eine ebenso präzise Ortsinformation hinsichtlich der Position des Sensors erforderlich. Um dies zu gewährleisten, muss, die Koordinaten-Messmaschine extrem präzise konstruiert sein. Sie ist deshalb sehr aufwendig. Außerdem ist die mechanische Abtastung mit erheblichen Nachteilen verbunden, weil einerseits, die Abtastgeschwindigkeit beschränkt ist und weil andererseits bei empfindlichen und elastischen Oberflächen Beschädigungen oder Messwertabweichungen unvermeidlich sind.

Auf dieser Grundlage betrifft die Erfindung auch ein verbessertes Abtastsystem zum Abtasten der Oberfläche eines Objektes, wobei das System ein Abtastsensor und eine Positionierungseinrichtung einschließt, mittels der ein an der Positionierungseinrichtung befestigter Abtastsensor in unterschiedliche gewünschte Positionen relativ zu einem Abtastobjekt, dessen Oberfläche abgetastet werden soll, bewegt werden kann. Dabei wird eine sehr gute Genauigkeit mit vermindertem konstruktivem Aufwand dadurch erreicht, dass ein Positionserkennungssystem gemäß der vorliegenden Erfindung verwendet wird, wobei die Zielobjekteinheit des Positionserkennungssystems in einer definierten Ortsposition bezüglich des Abtastsensors angeordnet (vorzugsweise starr an diesem befestigt) ist, so dass durch Detektion der Ortsposition der Zielobjekteinheit eine Information Ober die Ortsposition des Abtastsensors gewonnen wird. Zur Ermittlung der gewünschten Oberflächen-Abtastinformation (surface scan information) wird die mittels des Positionserkennungssystems gewonnene Information über die Ortsposition des Abtastsensors (sensor position information) mit der Abtastinformation des Abtastsensors (sensor scan information) kombiniert.

Bevorzugt wird als Positionierungseinrichtung für die Oberflächenabtastung ein Positionierungsroboter mit einem mehrdimensional beweglichen Roboterarm verwendet, wobei der Abtastsensor und die Zielobjekteinheit an dem Roboterarm befestigt sind. Ein Abtastsystem, bei dem ein Positionierungsroboter verwendet wird, ist in der DE 102004039760 A1 beschrieben. Dabei ist am distalen Ende des Roboterarms ein kugehförmiges Gehäuse angebracht, welches einerseits eine Abtastspitze bildet, mit der eine Oberfläche mechanisch abgetastet wird, und welches andererseits einen Retroreflektor enthält, dessen Position mittels eines Laser-Tracker-Systems bestimmt werden kann. Mit dieser Konstruktion soll eine Genauigkeit im Sub-mm-Bereich erreicht werden. Im Rahmen der vorliegenden Erfindung werden die Vorteile, die die Verwendung eines Positionierungsroboters mit sich bringt (großer Aktionsradius, umfassende Bewegungsfreiheitsgrade, die die Verfolgung auch sehr komplizierter Oberflächen ermöglicht; im Vergleich zu einer Koordinatenmessmaschine geringe Kosten) genutzt. Zugleich wird im Vergleich zu der DE 102004039760 A1 eine wesentliche bessere Genauigkeit bis in den Sub-µm-Bereich erreicht.

Bevorzugt wird im Rahmen des erfindungsgemäßen Oberflächen-Abtastsystems ein berührungslos arbeitender Abtastsensor verwendet. Bevorzugte Konstruktionsmerkmale geeigneter Abtastsensoren sind in der US200510190371 A1, der WO2005/088241 A1 und in der internationalen Patentanmeldung PCT/EP 20061011586 beschrieben. Durch Kombination der dort beschriebenen Konstruktionsmerkmale von Abtastsensoren mit dem hier beschriebenen Abtastsystem ist die Abtastung auch sehr komplizierter Oberflächen mit höchster Genauigkeit schnell und mit verhältnismäßig geringem Aufwand möglich.

Die Erfindung wird nachfolgend anhand von in den Figuren dargestellten Ausführungsbeispielen näher erläutert. Die dargestellten Besonderheiten können einzeln oder in Kombination verwendet werden, um bevorzugte Ausgestaltungen der Erfindung zu schaffen. Es zeigen:
- Fig. 1: eine schematische Seitenansicht, teilweise als Blockschaltbild, von einem erfindungsgemäßen Abtastsystem, bestehend aus einem Positionierungsroboter und einem Abtastsensor, dessen Position mittels eines erfindungsgemäßen Positionserkennungssystems detektiert wird,
- Fig. 2: eine Detailansicht zur Erläuterung von im Rahmen der Erfindung wesentlichen geometrischen Bedingungen hinsichtlich des Messlichts und des Referenzlichts und
- Fig.3: eine Seitenansicht von einer alternativen Ausgestaltung eines für die Erfindung geeigneten Detektorarrays.

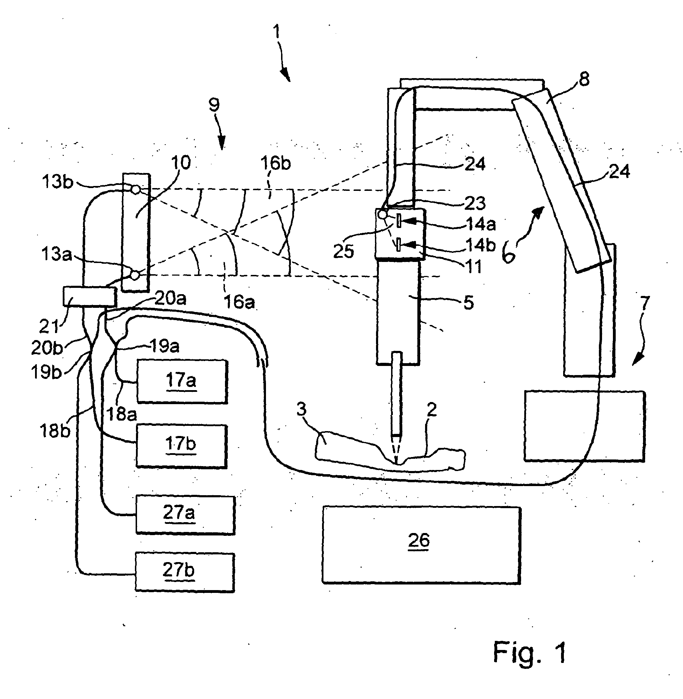

Figur 1 zeigt ein Abtastsystem 1 zum Abtasten der Oberfläche 2 eines Objektes 3- Das Abtastsystem 1 besteht aus einem kontaktlos arbeitenden Abtastsensor 5 und einem als Positionierungseinrichtung 6 für den Abtastsensor dienenden Positionierungsroboter 7 mit einem mehrdimensional beweglichen Roboterarm 8.

Mittels des Positionierungsroboters 7 kann der Abtastsensor 5 dergestalt über die Oberfläche 2 des Objektes 3 geführt werden, das er (vorzugsweise optisch) die Oberfläche 2 abtastet, wobei mit hoher Genauigkeit Änderungen des Abstandes zwischen dem Abtästsensor 5 und der Oberfläche erfasst werden. Geeignete Abtastsensoren und Positionsroboter sind - abgesehen von den hier beschriebenen Besonderheiten - bekannt, wobei unter anderem auf die oben erwähnten Dokumente verwiesen werden kann.

Um die gewünschte Oberflächen-Abtastinformation hinsichtlich der Oberfläche 2 zu gewinnen, ist es notwendig, zusätzlich zu der Abtastinformation des Abtastsensors dessen Ortsposition exakt zu detektieren. Hierzu dient ein Positionserkennungssystem, das als zwei getrennte Komponenten eine Messlichtsendeeinheit 10 und eine Zielobjekteinheit 11, die starr mit dem Messsensor 5 gekoppelt ist, einschließt. Bezogen auf das Positionserkennungssystem bildet der Sensor 5 ein Zielobjekt, dessen Position mit dem Positionserkennungssystem detektiert wird.

Die Messlichtsendeeinheit 10 hat im dargestellten Fall zwei Lichtsender 13a,13b und die Zielobjekteinheit 11 zwei Detektorarrays 14a,14b, die - wie noch näher erläutert wird - jeweils aus einer Mehrzahl von lichtempfindlichen Detektorpixeln bestehen. Die Anzahl der Lichtsender 13 und der Detektorarrays 14 sollte vorzugsweise der Dimensionalität des Positionserkennungsproblems entsprechen. Wenn die Positionserkennung ein eindimensionales Problem ist (beispielsweise weil das Zielobjekt nur entlang einer exakt definierten Bahn beweglich ist, und deswegen durch Bestimmung des Abstandes zwischen der Mmslichtsendeeinheit und der Zieiobjekteinheit eine vollständige Ortsinformation über das Zielobjekt gewonnen werden kann) genügt ein Lichtsender und ein Detektorarray. Besonders geeignet ist die Erfindung jedoch zur mehrdimensionalen Positionserkennung bzw. Abtastung, wobei die Lichtsendeeinheit mindestens zwei, vorzugsweise mindestens drei Lichtsender und die Zielobjekteinheit mindestens zwei, vorzugsweise mindestens drei Detektorarrays aufweist.

Bevorzugt entspricht die Mindestanzahl der Lichtsender und auch die Mindestanzahl der Detektorarrays der Dimensionalität des Problems, also für ein zweidimensionales Problem jeweils mindestens zwei und für ein dreidimensionales Problem jeweils mindestens drei. Eine größere Anzahl von Lichtsendern und/oder Detektorarrays als der Dimensionalität des Problems entspricht, ist nicht notwendig, kann unter Umständen aber vorteilhaft sein, um durch Redundanz eine besonders hohe Robustheit gegen Störungen zu erreichen.

Die Mehrzahl von Detektorarrays wird vorzugsweise mittels einer entsprechenden Mehrzahl von getrennten elektronischen Bauteilen, beispielsweise CCD-Chips, realisiert. Grundsätzlich besteht jedoch auch die Möglichkeit, eine Mehrzahl von Detektorarrays auf einem einzigen entsprechend großflächigen Bauteil zu realisieren, wobei jeweils eine Teilmenge der Pixel das jeweils aktive Detektorarray bildet. Jedes Detektorarray weist vorzugsweise mindestens eine Reihe von Detektorpixeln auf, die sich längs einer Linie erstrecken, wobei diese Linie vorzugsweise gerade verläuft.

Die Messlichtsender 13a,13b strahlen jeweils kohärentes Licht derartig in Richtung auf die Zielobjekteinheit 11, dass jeder ihrer Messlichtstrahlen 16a,16b auf jedes der Detektorarrays 14 auftrifft. Als Lichtquelle für das kohärente Messlicht dienen Laserlichtquellen 17a,17b, von denen das Messlicht über Lichtleitfasern 18a,18b, Optikkoppler 19a,19b und weitere Lichtleitfasern 20a,20b zu einer Phasenmodulatoreinheit 21 und von dort zu Aussendepunkten am Ende der Lichtleitfasern geführt wird, die die Uchtsender 13a,13b bilden.

Die Zielobjekteinheit 11 schließt einen Referenzlichtsender 23 ein, der, ebenso wie die Messlichtsender 13a und 13b von Lichtaussendepunkten am Ende eines Lichtleitfaserkabels 24 gebildet wird. Über das Referenzlichtleitkabel 24 wird Referenzlicht, welches in den Optikkopplern 19a,19b von dem Licht der Laserlichtquellen 17a,17b abgezweigt wurde, dem Referenzlichtsender 23 zugeführt. Von dem Referenzlichtsender 23 wird ein Referenzlichtstrahl 25 derart abgestrahlt, dass er auf jedes Detektorarray 14a,14b der Zielobjekteinheit 11 auftrifft.

Wenn hinsichtlich der überlagerten Wellenfronten der Messlichtstrahlen 16a,16b und des Referenzlichtstrahls 25 bestimmte Bedingungen, die nachfolgend noch näher erläutert werden, eingehalten sind, erzeugen jeweils eines oder mehrere der Pixel, aus denen die Detektorarrays 14a,14b bestehen, Interferenzsignale, aus denen Abstandsinformationen über Änderungen des Abstandes zwischen dem jeweiligen ein Interferenzsignal erzeugenden Detektorpixel und dem Messlichtsender 13a bzw. 13b (somit auch zu der Messlichtsendeeinheit 10) ermittelt werden können. Die Verarbeitung des Interferenzsignals zu der Abstandsinformation erfolgt in bekannter Weise mit Technologien, die auch bei Lasertrackersystemen verwendet werden. Vorzugsweise wird das Licht der Messlichtstrahlen 16a,16b mittels der Phasenmodulatoreinheit 21 frequenzmoduliert. Um die von den Messlichtstrahlen 16a,16b erzeugten Interferenzsignale trennen zu können, wird deren Licht vorzugsweise unterschiedlich moduliert, wobei diese Unterscheidungsmodulation sowohl eine Phasenmodulation als auch eine Amplitudenmodulation sein kann. Die Signalverarbeitung erfolgt mittels einer in Figur 1 nur symbolisch dargestellten Zentraleinheit 26, an die die Messdaten über nicht dargestellte Datenleitungen oder auch drahtlos übermittelt werden können. Die Zentraleinheit 26 erzeugt auch die Steuersignale für die aktiven Komponenten des Systems (Laserlichtquellen 17, Phasenmodulatoreinheit 21, Positionierungsroboter 7, Abtastsensor 5).

Figur 1 zeigt eine zweidimensionale Darstellung für ein zweidimensionales Problem mit je zwei Lichtsendern und Detektorarrays. Durch Bestimmung der Abstände zwischen jeweils (mindestens) einem ein Interferenzsignal erzeugenden Detektorpixel jedes Arrays und jedem Lichtsenders kann die Position der Zielobjekteinheit und damit des Zielobjektes einschließlich dessen Lage im Raum (beispielsweise ausgedrückt durch vier Raum-Koordinaten x,y, Kippen und Neigen) vollständig bestimmt werden. Im Falle eines dreidimensionalen Problems sind, wie oben dargelegt, vorzugsweise mindestens drei Lichtsender und drei Detektorarrays vorgesehen. Damit lassen sich alle sechs Raum-Koordinaten (x,y,z, Kippen, Neigen, Rollen) bestimmen, die die Position und Orientierung des Zielobjektes im Raum vollständig beschreiben.

Ein technisches Problem resultiert daraus, dass bei dem dargestellten Positionserkennungssystem 9 der Lichtweg von den als Strahlteiler wirkenden Optikkopplern 19a,19b zu dem Referenzlichtsender 23 sehr lang ist. Aufgrund der Bewegungen des Positionierungsroboters 7 kann es zu (geringen) dynamischen Dehnungen des Referenzlichtleitkabels 24 kommen. Bei sehr hohen Ansprüchen an die Genauigkeit der ermittelten Abstandsinformation ist eine Kompensation der aus solchen dynamischen Dehnungen resultierenden Längenvariation des Referenzlichtweges erforderlich. Sie erfolgt mittels einer Teilrückkopplung des Referenzlichts.

Zu diesem Zweck ist das Referenzlichtleitkabel 24 im Bereich des Referenzlichtsenders 23 so ausgebildet, dass ein Teil des Referenzlichts in das Lichtleitkabel 24 zurückreflektiert wird. Auch die Lichtleitkabel 20a,20b sind im Bereich der Lichtsender 13a,13b so ausgebildet, dass ein Teil des Messlichts in die genannten Lichtleitkabel zurückreflektiert wird. Ober die Optikkoppler 19a,19b gelangen beide zurückreflektierten Lichtanteile in Kompensatoreinheiten 27a,27b, in denen sie zur Interferenz gebracht werden. Aus den resultierenden Interferenzsignalen lässt sich die für die Kompensation erforderliche Information über dynamische Längenänderungen des Referenzlichtweges (Lichtleitkabel 24) im Vergleich zu dem Messlichtweg (Lichtleitkabel 20a,20b) ermitteln. Auf Basis dieser Information können Fehler durch die dynamische Längenänderung der Lichtleitkabel (insbesondere des langen Kabels zu dem Referenzlichtsender) kompensiert werden.

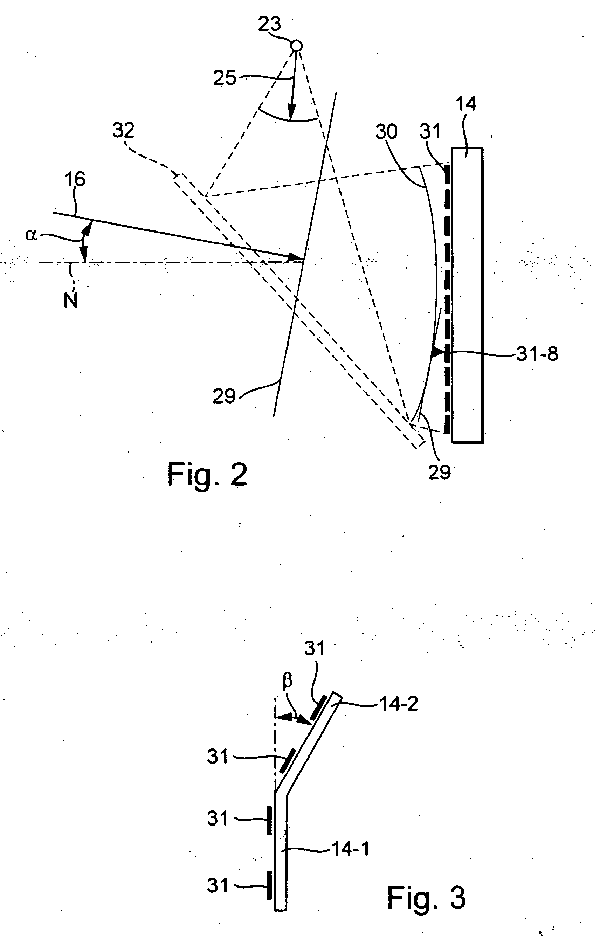

Anhand von Figur 2 werden die geometrischen Bedingungen erläutert, die eingehalten werden müssen, damit ohne bewegliche Teile ein Interferenzsignal erzeugt wird, obwohl der Einfallswinkel des Messlichtstrahls relativ zu der Zielobjekteinheit und damit auch zu deren Detektorarrays über einen größeren Winkelbereich variiert.

Dargestellt ist ein Messlichtstrahl 16, der unter einem Winkel α, bezogen auf eine Normale N zu der Oberfläche des Detektorarrays 14 einfällt. Da die Entfernung des Lichtsenders 13 sehr viel größer als die Ausdehnung des Detektorarrays 14 ist, verlaufen die Wellenfronten 29 des Messlichtstrahls 16 näherungsweise gerade. Jedenfalls ist ihre Krümmung deutlich geringer als die Krümmung der Wellenfronten 30 des auf sehr viel kürzerem Weg von dem Referenzlichtsender 23 über einen halbdurchlässigen Spiegel 32 auf das Detektorarray 24 auftreffenden Referenzlichtstrahls 25.

Voraussetzung für ein messbares Interferenzsignal ist, dass die lokalen Wellenfronten des Messlichtstrahls 16 und des Referenzlichtstrahls 25 hinreichend parallel auf ein Detektorpixel 31 des Arrays 14 auftreffen. Exakte Angaben über zulässige Abweichungen von dieser Parallelitätsbedingung können nicht gemacht werden, u.a. weil die Auswertbarkeit der Interferenzsignale von der verwendeten Messelektronik abhängt. Eine näherungsweise Abschätzung ermöglicht die Formel α = λ / (2d). Bei einer Wellenlänge von λ = 630 nm und einem Durchmesser der Detektorpixel von d = 10µm errechnet sich nach dieser Gleichung eine zulässige Winkelabweichung von α = 0,03 rad oder 1,7°.

Aus der Darstellung in Figur 2 erkennt man, dass diese Bedingung aufgrund der unterschiedlichen Krümmungen der Wellenfronten 29,30 nur für eines oder einige wenige benachbarte der Detektorpixel 31 des Detektorarrays 14 erfüllt ist. In Figur 3 trifft dies für das mit 31-8 bezeichnete achte Detektorpixel des Arrays 14 zu.

Damit wird deutlich, dass bei Einhaltung der erläuterten geometrischen Bedingungen hinsichtlich der Positionierung der Punkte (Lichtsender), von denen der Messlichtstrahl und der Referenzlichtstrahl ausgeht, und der damit zusammenhängenden Krümmung der Wellenfronten beider Strahlen in Verbindung mit einem geeigneten Detektorarray ein größerer Winkelbereich des einfallenden Messlichtstrahls 16 erfasst werden kann, ohne das bewegliche Teile erforderlich sind. Je größer die Krümmung der Wellenfronten des Referenzlichtstrahls 25 relativ zu den Wellenfronten des Messlichtstrahls 16 ist, desto größere Winkel α zwischen dem Messlichtstrahl 16 und der Normalen N des Detektorarrays 14 können ausgewertet werden. Gleichzeitig reduziert sich dabei die Anzahl der interferierenden Nachbarpixel. Die praktische Erprobung der Erfindung hat gezeigt, dass der Winkel α für planare Detektorarrays (mit in einer gemeinsamen Ebene liegenden Detektorpixeln) etwa ± 45° bis maximal ± 60° beträgt. Dies reicht für die meisten Anwendungsfälle aus. Sollte ein noch größerer Bereich benötigt werden, kann die in Figur 3 dargestellte Anordnung eines Detektorarrays gewählt werden, bei dem unterschiedliche Teile 14-1 und 14-2 des Arrays unter einem Winkel β zueinander orientiert sind, wobei der Winkel β vorzugsweise mindestens 30° beträgt.

Es sind zahlreiche Variationen der beschriebenen Erfindung möglich, wobei unter anderem folgendes zu berücksichtigen ist:
- Als Detektorarray eignen sich unterschiedliche elektronische Bauteile, sofem sie eine Mehrzahl von lichtempfindlichen Elementen enthalten, die eine ortsaufgelöste Detektion von Licht ermöglichen. Vorzugsweise erstrecken sich die lichtempfindlichen Elemente (Pixel) des Detektorarrays längs einer Linie, die vorzugsweise (aber nicht notwendigerweise) gerade verläuft. Unter Berücksichtigung von Kosten und Funktion sind insbesondere CCD-Detektorarrays geeignet.
- Die Wellenlänge des im Rahmen der Erfindung verwendeten Lichts muss nicht im sichtbaren Bereich liegen. "Licht" im Sinne der Erfindung bezeichnet demzufolge elektromagnetische Wellen auch in der Nachbarschaft des sichtbaren Bereiches (sowohl Richtung IR als auch UV).
- Die Krümmung der Wellenfronten des Messlichtstrahls und des Referenzlichtstrahls beim Verlassen der entsprechenden Lichtsender resultiert aus den dort gegebenen optischen Bedingungen. Eine punktförmige Lichtquelle führt zu kugelförmigen Wellenfronten. Durch Austrittsoptiken können jedoch auch anders (nicht kugelförmig) gekrümmte Wellenfronten erzeugt werden, die für die Erfindung geeignet sind, sofem die erläuterten Bedingungen hinsichtlich der unterschiedlichen Krümmungen beim Auftreffen auf die Detektorarrays eingehalten werden.
- Die in Figur 1 dargestellte Gestattung, bei der das einer Mehrzahl von Lichtsendern 13a,13b entsprechende (kohärente und deswegen interferenzfähige) Referenzlicht an einem gleichen (gemeinsamen) Punkt (Referenzlichtsender 23) austritt, ist aus praktischen Gründen vorteilhaft, jedoch nicht notwendig. Es können auch mehrere Austrittsorte für das Referenzlicht (Referenzlichtsender) an der Zielobjekteinheit vorgesehen sein.
- Wie erläutert, kann das Positionserkennungssystem grundsätzlich ohne bewegliche Teile betrieben werden. Voraussetzung ist jedoch, dass das Messlicht mit einer ausreichenden Intensität auf die Detektorarrays der Zielobjekteinheit auftrifft. Deswegen muss es von den Messlichtsendern hinreichend breit abgestrahlt werden. Falls aus Intensitätsgründen eine stärkere Bündelung des Messlichts erforderlich ist, oder bei sehr großen Bewegungsbereichen des Zielobjektes kann eine Schwenkeinrichtung vorgesehen sein, die das Messlicht auf die Zielobjekteinheit richtet, wobei aber im Gegensatz zu Lasertrackersystemen eine grobe und deswegen kostengünstig realisierbare Ausrichtung des Messlichts ausreicht.

## Patentansprüche

1. Positionserkennungssystem zur berührungslosen interferometrischen Detektion der Ortsposition eines Zielobjektes, mit
einer Zielobjekteinheit (11) und
einer Messlichtsendeeinheit (10) mit mindestens einem Messlichtsender (13), von dem ein Messlichtstrahl (16) mit kohärentem Licht auf die Zielobjekteinheit (11) gestrahlt wird,
wobei die Ortsposition der Zetobjekteinheit (11) mittels interferometrischer Messdaten bestimmt wird, die aus Interferenzsignalen gewonnen werden, welche ein Detektor infolge Überlagerung des Messlichtstrahls (16) mit einem Referenzlichtstrahl (25), der mit dem Messlichtstrahl (16) kohärent ist, erzeugt,
**dadurch gekennzeichnet dass,**
die Zielobjekteinheit (11) einen Referenzlichtsender (23) einschließt, der so ausgebildet ist, dass er einen Referenzlichtstrahl (25) mit gekrümmten Lichtwellenfronten (30) aussendet,
die Zielobjekteinheit mindestens ein Detektorarray (14) mit einer Mehrzahl von Detektorpixeln (31) einschließt, das so an der Zielobjekteinheit (11) befestigt ist, dass der Referenzlichtstrahl (25) des Referenzlichtsenders (23) darauf auftrifft,
wobei
- die Wellenfronten (29) des Messlichtstrahls (16) auf das Detektorarray (14) der Zielobjekteinheit (11) mit einer im Vergleich zu den Wellenfronten (30) des Referenzlichtstrahls (25) geringeren Krümmung auftreffen,
- die Wellenfronten (29,30) des Messlichtstrahls (16) und des Referenzlichtstrahls (23) nur auf einen Teil (31-8) der Detektorpixel des Detektorarrays (14) hinreichend parallel auftreffen, um die Erzeugung eines Interferenzsignals in dem Detektorpixel (31-8) zu ermöglichen,
- durch Auswertung der Interferenzsignale von mindestens einem ein Interferenzsignal erzeugenden Detektorpixel (31-8) des Detektorarrays (14) Abstandsinformationen Ober Änderungen des Abstands zwischen dem jeweiligen Detektorpixel (31-8) und dem Messlichtsender ermittelt werden und
- die Ortsposition des Zielobjektes relativ zu der Messlichtsendeeinheit (10) unter Verwendung dieser Abstandsinformationen bestimmt wird.

2. Positionserkennungssystem nach Anspruch 1, **dadurch gekennzeichnet, dass** das Detektorarray (14) eine Reihe von Detektorpixeln (31) aufweist, die sich längs einer, vorzugsweise geraden, Linie erstrecken.

3. Positionserkennungssystem nach einem der vorhergehenden Ansprüche, **dadurch gekennzeichnet, dass** es einen Phasenmodulator (21) zur Modulation des Messlichtstrahls (16) aufweist.

4. Positionserkennungssystem nach einem der vorhergehenden Ansprüche, **dadurch gekennzeichnet, dass**
die Zelobjekteinheit (11) eine Mehrzahl von mindestens zwei, vorzugsweise mindestens drei Detektorarrays (14a,14b) mit jeweils einer Mehrzahl von Detektorpixeln (31) einschließt, die so an der Zielobjekteinheit (11) befestigt sind, dass der Referenzlichtstrahl (25) des Referenzlichtsenders (23) darauf auftrifft, wobei die Wellenkonten (29) des mindestens einen Messlichtstrahls (16) und des Referenzlichtstrahls (25) nur auf einen Teil der Detektorpixel (31) jedes der Detektorarrays (14a,14b) hinreichend parallel auftreffen, um die Erzeugung eines Interferenzsignals in dem Detektorpixel (31-8) zu ermöglichen, und
die Ortsposition des Zielobjektes relativ zu der Messlichtsendeeinheit (10) unter Verwendung von Abstandsinformationen ermittelt wird, die durch Auswertung der Interferenzsignale von jeweils mindestens einem ein Interferanzsignal erzeugenden Detektorpixel (31-8) der Mehrzahl von Detektorarrays (14a,14b) gewonnen werden.

5. Positionserkennungssystem nach einem der vorhergehenden Ansprüche, **dadurch gekennzeichnet, dass** die Messlichtsendeeinheit (10) eine Mehrzahl von mindestens zwei, vorzugsweise mindestens drei, Messlichtsendem (13a,13b) aufweist, von denen jeweils ein Messlichtstrahl (16a,16b) auf die Zielobjekteinheit gestrahlt wird.

6. Positionserkennungssystem nach Anspruch 5, **dadurch gekennzeichnet, dass** es einen Modulator einschließt, mit dem die Mehrzahl der Messlichtstrahlen (16a,16b) der Mehrzahl von Messlichtsendem (13a,13b) unterschiedlich moduliert wird.

7. Abtastsystem zum Abtasten der Oberfläche (2) eines Abtastobjektes (3), umfassend
einen Abtastsensor (5) und
eine Positionierungseinrichtung (6), mittels der ein an der Positionierungseinrichtung (6) befestigter Abtastsensor (5) in unterschiedliche gewünschte Positionen relativ zu dem Abtastobjekt bewegt werden kann,
**dadurch gekennzeichnet, dass**
es ein Positionserkennungssystem (9) nach einem der vorhergehenden Ansprüche aufweist, wobei die Zielobjekteinheit in einer definierten Ortsposition bezüglich des Abtastsensors angeordnet ist, so dass durch Detektion der Ortsposition der Zielobjekteinheit (11) die Ortsposition des Abtastsensors (5) bestimmt wird und
die mittels des Positionierungssystems bestimmte Information über die Ortsposition des Abtastsensors (5) in Verbindung mit dessen Abtastinformationen zu der gewünschten Oberflächen-Abtastinformation verarbeitet wird.

8. Abtastsystem nach Anspruch 7, **dadurch gekennzeichnet, dass** die Positionierungseinrichtung einen Positionierungsroboter (7) mit einem mehrdimensional beweglichen Roboterarm (8) einschließt, wobei der Abtastsensor (5) und die Zielobjekteinheit (11) an dem Roboterarm (8) befestigt sind.

9. Abtastsystem nach einem der Ansprüche 7 oder 8, **dadurch gekennzeichnet, dass** der Abtastsensor (5) kontaktlos arbeitet.

## Claims

1. Position detection system for the contactless interferometric detection of the location of a target object (11), comprising
a target object unit (11), and
a measuring light transmitter unit (10) with at least one measuring light transmitter (13) from which a measuring light beam (16) with coherent light is radiated onto the target object unit (11),
wherein the location of the target object unit (11) is determined using interferometric measuring data obtained from interference signals which are generated by a detector due to the interference of the measuring light beam (16) with a reference light beam (25), which is coherent with the measuring light beam (16),
**characterized in that**
the target object unit (11) comprises a reference light transmitter (23), which is configured in such a manner that it transmits a reference light beam (25) with curved light wave fronts (30),
the target object unit comprises at least one detector array (14) having a plurality of detector pixels (31), the detector array (14) being fixed to the target object unit (11) in such a manner that the reference light beam (25) of the reference light transmitter (23) impinges thereon,
wherein
- the wave fronts (29) of the measuring light beam (16) impinge onto the detector array (14) of the target object unit (11) with a curvature which is less than the curvature of the wave fronts (30) of the reference light beam (25),
- the wave fronts (29, 30) of the measuring light beam (16) and of the reference light beam (23) impinge only onto a portion (31-8) of the detector pixels of the detector array (14) with a sufficiently parallel orientation to allow the generation of an interference signal in the detector pixel (31-8),
- interference signals of at least one interference-signal-generating detector pixel (31-8) of the detector array (14) are evaluated to determine distance information about changes of the distance between the respective detector pixel (31-8) and the measuring light transmitter, and
- the location of the target object relative to the measuring light transmitter unit (10) is determined using this distance information.

2. Position detection system according to claim 1, **characterized in that** the detector array (14) comprises a row of detector pixels (31), which extend along a line, which line is preferably straight.

3. Position detection system according to any one of the preceding claims, **characterized in that** it comprises a phase modulator (21) for modulating the measuring light beam (16).

4. Position detection system according to any one of the preceding claims, **characterized in that**
the target object unit (11) comprises a plurality of at least two, preferably at least three detector arrays (14a, 14b) each with a plurality of detector pixels (31) the plurality of detector arrays (14a,14b) being fixed to the target object unit (11) in such a manner that the reference light beam (25) of the reference light transmitter (23) impinges thereon, wherein the wave fronts (29) of the at least one measuring light beam (16) and of the reference light beam (25) impinge only on a portion of the detector pixels (31) of each detector array (14a, 14b) with a sufficiently parallel orientation to allow the generation of an interference signal in the detector pixel (31-8), and
the location of the target object relative to the measuring light transmitter unit (10) is determined using distance information which is obtained by evaluating the interference signals of at least one interference-signal-generating detector pixel (31-8) of each of the plurality of detector arrays (14a, 14b).

5. Position detection system according to any one of the preceding claims, **characterized in that** the measuring light transmitter unit (10) has a plurality of at least two, preferably at least three measuring light transmitters (13a, 13b), each adapted for radiating a measuring light beam (16a, 16b) onto the target object unit.

6. Position detection system according to claim 5, **characterized in that** it comprises a modulator by means of which the plurality of measuring light beams (16a, 16b) of the plurality of measuring light transmitters (13a, 13b) is modulated differently.

7. Scanning system for scanning the surface (2) of an object (3) to be scanned, comprising
a scanning sensor (5), and
a positioning device (6), by means of which a scanning sensor (5) which is fixed to the positioning device (6) can be moved in different desired positions relative to the object to be scanned,
**characterized in that**
it comprises a position detection system (9) for the detection of a position according to any one of the preceding claims, wherein the target object unit is located in a defined position with respect to the scanning sensor so that by detection of the position of the target object unit (11), the position of the scanning sensor (5) is determined, and
the sensor (5) position information determined by means of the positioning system is processed together with the sensor scan information to generate the desired surface scan information.

8. Scanning system according to claim 7, **characterized in that** the positioning device comprises a positioning robot (7) with a multi-dimensionally movable robot arm (8), wherein the scanning sensor (5) and the target object unit (11) are fixed to the robot arm (8).

9. Scanning system according to any one of the claims 7 or 8, **characterized in that** the scanning sensor (5) operates contactless.

## Revendications

1. Système de reconnaissance de position pour la détection interférométrique sans contact de la position locale d'un objet cible, comprenant
- une unité d'objet cible (11) et
- une unité d'émission de lumière de mesure (10) avec au moins un émetteur de lumière de mesure (13), duquel un rayon lumineux de mesure (16) de lumière cohérente est rayonné sur l'unité d'objet cible (11),
- la position locale de l'unité d'objet cible (11) étant déterminée au moyen de données de mesure interférométriques, acquises de signaux d'interférence que génère un détecteur par suite de la superposition du rayon lumineux de mesure (16) avec un rayon lumineux de référence (25) qui est cohérent avec le rayon lumineux de mesure (16),
**caractérisé en ce que**
- l'unité d'objet cible (11) inclut un émetteur de lumière de référence (23), qui est réalisé de sorte qu'il émette un rayon lumineux de référence (25) avec des fronts d'ondes lumineuses (30) courbées,
- l'unité d'objet cible inclut au moins une mosaïque de détecteurs (14) avec une pluralité de pixels de détecteurs (31), laquelle mosaïque est fixée sur l'unité d'objet cible (11) de sorte qu'elle soit frappée par le rayon lumineux de référence (25) de l'émetteur de lumière de référence (23),
- les fronts d'ondes (29) du rayon lumineux de mesure (16) frappant la mosaïque de détecteurs (14) de l'unité d'objet cible (11) avec une courbure plus faible par rapport aux fronts d'ondes (30) du rayon lumineux de référence (25),
- les fronts d'ondes (29, 30) du rayon lumineux de mesure (16) et du rayon lumineux de référence (23) ne frappant suffisamment en parallèle qu'une partie (31 - 8) des pixels de la mosaïque de détecteurs (14) pour permettre de générer un signal d'interférence dans le pixel de détecteur (31 - 8),
- des informations de distance sur des variations de la distance entre le pixel de détecteur respectif (31 - 8) et l'émetteur de lumière de mesure étant déterminées par évaluation des signaux d'interférence d'au moins un pixel (31 - 8), générant un signal d'interférence, de la mosaïque de détecteurs (14), et
- la position locale de l'objet cible par rapport à l'unité d'émission de lumière de mesure (10) étant déterminée en utilisant ces informations de distances.

2. Système de reconnaissance de position suivant la revendication 1, **caractérisé en ce que** la mosaïque de détecteurs (14) présente une série de pixels (31) qui s'étendent le long d'une ligne, de préférence droite.

3. Système de reconnaissance de position suivant l'une des revendications précédentes, **caractérisé en ce qu'**il présente un modulateur de phase (21) pour la modulation du rayon lumineux de mesure (16).

4. Système de reconnaissance de position suivant l'une des revendications précédentes, **caractérisé en ce que**
- l'unité d'objet cible (11) inclut une pluralité d'au moins deux, de préférence d'au moins trois, mosaïques de détecteurs (14a, 14b) avec respectivement une pluralité de pixels de détecteurs (31), qui sont fixées sur l'unité d'objet cible (11) de sorte qu'elles soient frappées par le rayon lumineux de référence (25) de l'émetteur de lumière de référence (23), les fronts d'ondes (29) de le au moins un rayon lumineux de mesure (16) et du rayon lumineux de référence (25) ne frappant suffisamment en parallèle qu'une partie des pixels (31) de chaque mosaïque de détecteurs (14a, 14b) pour permettre de générer un signal d'interférence dans le pixel de détecteur (31 - 8), et
- la position locale de l'objet cible par rapport à l'unité d'émission de lumière de mesure (10) est déterminée en utilisant des informations de distances qui sont acquises par évaluation des signaux d'interférence de respectivement au moins un pixel (31 - 8), générant un signal d'interférence, de la pluralité de mosaïques de détecteurs (14a, 14b).

5. Système de reconnaissance de position suivant l'une des revendications précédentes, **caractérisé en ce que** l'unité d'émission de lumière de mesure (10) présente une pluralité d'au moins deux, de préférence d'au moins trois, émetteurs de lumière de mesure (13a, 13b), desquels est à chaque fois rayonné un rayon lumineux de mesure (16a, 16b) sur l'unité d'objet cible.

6. Système de reconnaissance de position suivant la revendication 5, **caractérisé en ce qu'**il inclut un modulateur, par lequel est modifiée différemment la pluralité des rayons lumineux de mesure (16a, 16b) de la pluralité des émetteurs de lumière de mesure (13a, 13b).

7. Système de balayage pour le balayage de la surface (2) d'un objet à balayer (3), comprenant
- un détecteur à balayage (5) et
- un dispositif de positionnement (6), au moyen duquel un détecteur à balayage (5), fixé sur le dispositif de positionnement (6), peut être déplacé dans différentes positions souhaitées par rapport à l'objet à balayer,
**caractérisé en ce que**
- il présente un système de reconnaissance de position (9) suivant l'une des revendications précédentes, l'unité d'objet cible étant disposée dans une position locale définie par rapport au détecteur à balayage, de sorte que la position locale du détecteur à balayage (5) soit déterminée par détection de la position locale de l'unité d'objet cible (11) et
- l'information, déterminée au moyen du système de positionnement, sur la position locale du détecteur à balayage (5) est traitée en liaison avec des informations de balayage de ce dernier pour obtenir l'information de balayage de surface souhaitée.

8. Système de balayage suivant la revendication 7, **caractérisé en ce que** le dispositif de positionnement inclut un robot de positionnement (7) avec un bras de robot (8) à mobilité multidimensionnelle, le détecteur à balayage (5) et l'unité d'objet cible (11) étant fixés sur le bras de robot (8).

9. Système de balayage suivant l'une des revendications 7 et 8, **caractérisé en ce que** le détecteur à balayage (5) fonctionne sans contact.
